# EUROPEAN PATENT APPLICATION

(11) **EP 1 607 864 A2**
(43) Date of publication of application: **21.12.2005**
(21) Application number: 04292057.9
(22) Date of filing: 17.08.2004
(51) Int. Cl.: G06F 11/07

(54) **Error recovery method for an I2C bus slave**

(30) Priority: 28.05.2004 EP 04012731
(71) Applicant: Thomson Licensing, 92100 Boulogne Billancourt (FR)
(72) Inventor: Tan, Beng Eng, Singapore 600240 (SG); Lee, Guan Swee, Singapore 529236 (SG); Wu, Ting, 680620 Singapore (SG)
(74) Representative: Schäferjohann, Volker

(57) **Abstract**

To implement an efficient and convenient way of ensuring that the I2C bus will not be stuck low during data communication between a TV microprocessor (master) and a DVD module microprocessor (slave) in a TV-DVD combo device it is proposed to implement a Watchdog timer (13) for the data communication via the I²C bus.

It has been detected that if the STOP condition is missing during the data transfer between master (10) and slave (11), the I²C bus will be blocked in low state for ever, i.e. the TV microprocessor (10) will no longer be able to communicate with the DVD module. This problem may occur due to some interference problems within the TV-DVD combo device.

With the implementation of the Watchdog timer (13), preferably in software a simple error recovery scheme for the I²C bus communication can be realized.

## Description

The invention relates to a method for resolving an error state during data communication over a serial data bus and a bus communication apparatus for use in said method.

### Background of the Invention

For serial data communication between Integrated Circuits the Inter IC bus has been developed many years ago by Philips Semiconductors and has found wide acceptance in the Consumer Electronics, Telecommunications and Industrial Electronics fields.

For this bus system only two bus lines are required; a serial data line SDA and a serial clock line SCL. Each device connected to the bus is software addressable by a unique address and simple master / slave relationships exist at all times; masters can operate as master-transmitters or as master-receivers. The bus structure is linear and the number of ICs that can be connected to the same bus is limited only by a maximum bus capacitance of 400 pF. It is a true multi-master bus including collision detection and arbitration to prevent data corruption if two or more masters simultaneously initiate a transfer. The arbitration procedure relies on the wired-AND connection of all I²C interfaces to the I²C-bus. Serial 8-bit oriented, bi-directional data transfers can be made at the up to 100 kbit/s in the standard mode or up to 400 kbit/s in the fast mode.

Both SDA and SCL are bi-directional lines, connected to a positive supply voltage via a pull-up resistor. When the bus is free, both lines are HIGH. The master starts a data transfer with a START condition on the bus lines. The master stops the data transfer with a STOP condition on the bus lines. The bus is considered to be free again a certain time after the STOP condition.

### Invention

During development of a TV-DVD combo device where a DVD player is integrated in a TV set, the inventors recognized the problem that at some instances in time the TV microprocessor, which is the master for data communication with the DVD module was unable to regularly end a data transfer by generating the STOP condition. This must be due to some interference within the combo device. It is assumed that the power supply causes the STOP condition to be missing. When the data line is pulled down to LOW then the master is unable to send the STOP condition. When this happens the whole device may be blocked. The master will not access the bus again because the data line SDA is pulled down LOW and the slave will not release the bus line because its waiting for the STOP condition.

To solve this problem an error recovery scheme for the I²C bus communication is proposed as claimed in method claim 1 and apparatus claim 5. This is based on the implementation of a watchdog timer that monitors a data transfer.

The watchdog timer is started at the instant of sending a START condition over the bus lines. The watchdog timer will be stopped at the instant of sending the STOP condition. If the STOP condition is falsified or omitted by interference, the watchdog timer reaches its limit and an interrupt signal will be generated. In the interrupt service routine the I²C bus interface will be reinitialised so that the bus lines are released to HIGH level. Further data transfers are enabled after this and the error state is recovered.

Further advantageous embodiments are apparent from the respective dependent claims.

### Brief Description of the Drawings

Exemplary embodiments of the invention will be explained in more detail with reference to the drawings, which show in
- Fig.1: two IC's of a TV- DVD combo device connected via I²C bus;
- Fig.2: the format of a complete data transfer;
- Fig.3: a flow chart of an interrupt service routine for starting and stopping the watchdog timer;
- Fig.4: a flow chart of an interrupt service routine executed for error recovery after calling by the watchdog timer.
- Fig.5: oscillographic measurements of a complete data transfer in normal condition;
- Fig.6: oscillographic measurements of a data transfer in error condition, and;
- Fig.7: oscillographic measurements of a complete data transfer during error condition but with error recovery;

### Exemplary embodiments

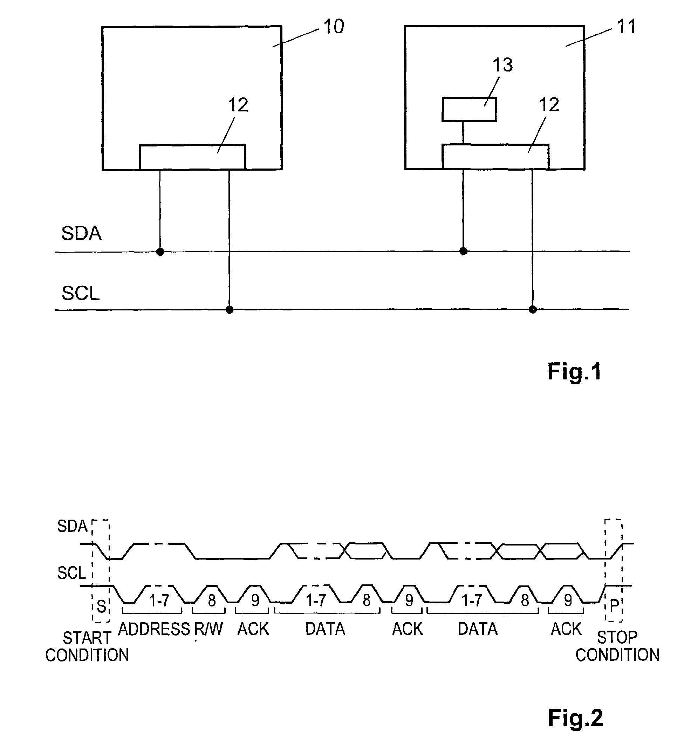

In Fig.1 reference number 10 denotes a control microprocessor of a TV set. Reference number 11 denotes a control microprocessor of the DVD module within the TV-DVD combo device. Both IC's are connected to the SDA and SCL lines of an I²C bus via an I²C bus interface 12. The TV microprocessor 10 is the master for the data communication with the DVD microprocessor 11.

Fig.2 shows a complete data transfer between TV and DVD microprocessors 10 and 11. When the bus is idle, both bus lines SDA and SCL are on HIGH level as shown on the left of Fig.2. The master initiates a data transfer by sending a START condition over the bus lines. This START condition is shown on the left side of Fig.2 as well. The START condition is defined by a HIGH to LOW transition on the SDA line while the SCL line is HIGH.

After the Start condition the master sends a slave address. This address is 7 bits long followed by an eighth bit which is a data direction bit R/W. After the eighth bit being sent, an acknowledge bit ACK is obligatory. The acknowledge-related clock pulse is generated by the master. The transmitter releases the SDA line (HIGH) during the acknowledge clock pulse. The receiver must pull down the SDA line during the acknowledge clock pulse so that it remains stable LOW during the HIGH period of this clock pulse. The two data bytes are sent either from master to slave or vice versa in dependency of the data direction bit. Each data byte is separately acknowledged. A data transfer is always terminated by a STOP condition generated by the master. The STOP condition is defined by a LOW to HIGH transition on the SDA line while the SCL line is High.

Detection of START and STOP conditions by ICs is easy if they incorporate the necessary interfacing hardware. However, microcontrollers with no such interface have to sample the SDA line at least twice per clock period in order to sense the transition.

As shown in Fig.1, according to the invention there is a watchdog timer in the DVD µP 11, which is the slave IC for the bus communication. The watchdog timer is implemented in software. Alternatively it can be implemented with dedicated hardware.

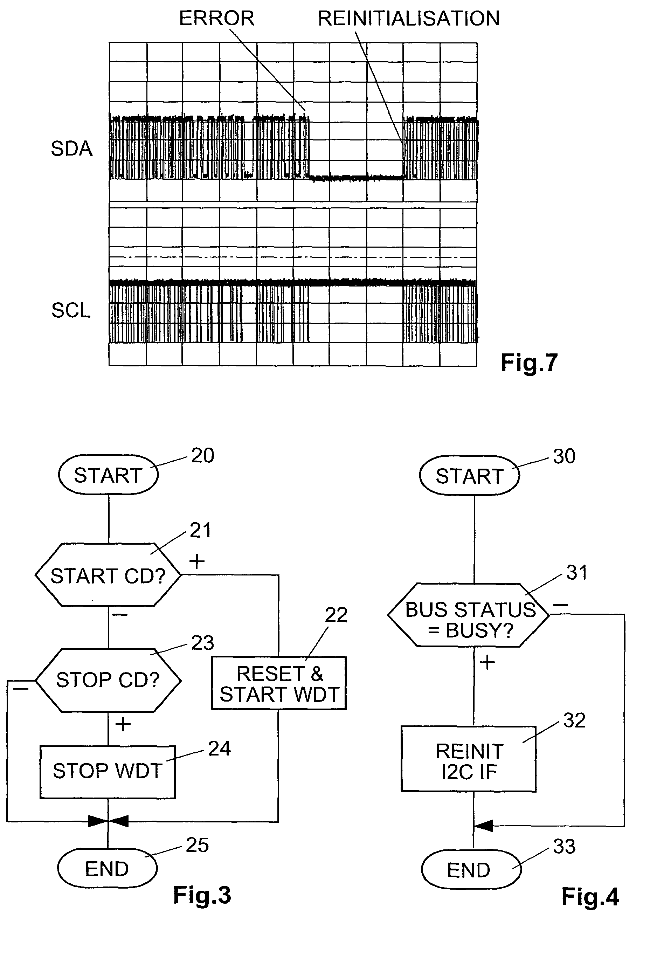

Fig.3 shows a flow chart for implementing the watchdog timer in software. Whenever the START or a STOP condition is detected by the I²C interface hardware, an interrupt will be generated for the slave IC 11. A corresponding interrupt service routine will be called. The flow chart of this routine is shown in Fig.3. The routine starts in step 20. In interrogation 21 it is checked whether a START condition had been detected just before generation of the interrupt. If yes, the watchdog timer is reset and started in step 22. The watchdog timer is a register that is regularly incremented by software means. The ISR routine ends in step 25.

If the result of interrogation 21 is negative, it is checked in interrogation 23 whether a STOP condition had been detected just before generation of the interrupt. If yes, the watchdog timer is stopped. If not, the routine ends in step 25. The routine also ends after stopping the watchdog timer.

An alternative embodiment relates to the solution to use different interrupts for starting and stopping the watchdog timer. A further alternative is to reset the watchdog timer just after stopping.

Fig.4 shows a flow chart of an interrupt service routine that will be called in slave 11 when the watchdog timer 13 exceeds the set maximum time limit value. This time limit is e.g. set to a value that is equivalent to one second. This routine is started in step 30. In interrogation 31 the bus status is checked. If it is found that the bus status is BUSY, then a reinitialisation of the I²C interface 12 in the takes place in step 32. The bus status BUSY is detected when the SDA line is LOW. After reinitialisation both bus lines will be HIGH thus signaling a free bus. The routine ends in step 33.

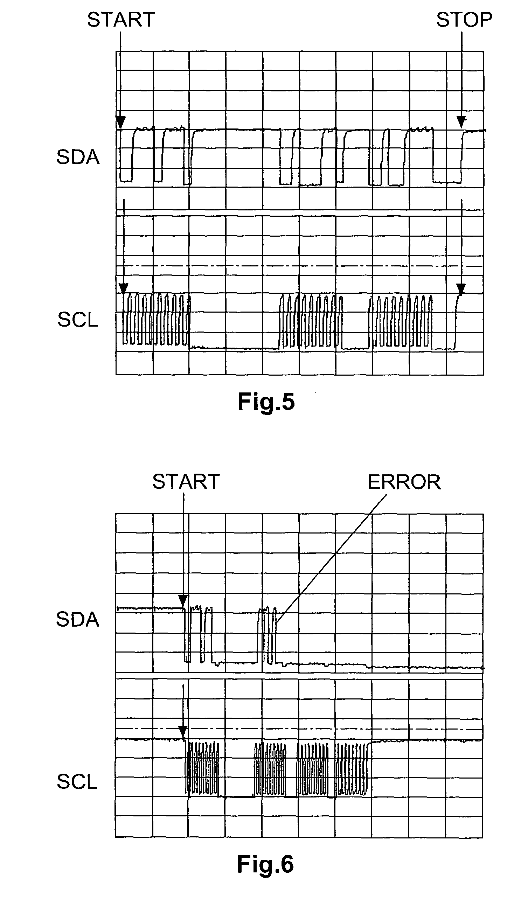

Fig.5 shows oscillographic measurements for the signals on the bus lines SDA and SCL in case of a complete data transfer with correct START and STOP condition. The positions of the START and STOP conditions are indicated.

Fig.6 shows oscillographic measurements for the signals on the bus lines SDA and SCL in case of an error. The point in time where the error occurs is indicated. Because of this error, the master is unable to send the Stop condition and the slave will not release the bus line SDA so that the bus is blocked.

Fig. 7 shows oscillographic measurements for the signals on the bus lines SDA and SCL for the case where an error also occurs however the error state is resolved after a while by means of the watchdog timer 13 according to the invention.

## Claims

1. Method for resolving an error state during data communication over a serial data bus (SDA, SCL), wherein the start of a data transfer is signaled by a START condition on the bus lines (SDA, SCL) and the end of the data transfer is signaled by a STOP condition on the bus lines (SDA, SCL), **characterized by** the steps of starting a Watchdog timer (13) upon detection of the START condition and re-initializing the bus status after the time limit set in the Watchdog timer (13) has be exceeded before a STOP condition has been detected.

2. Method according to claim 1, wherein the serial data bus is a master/slave bus and the master (10) starts a data transfer by means of said START condition and completes a data transfer by means of said STOP condition.

3. Method according to claim 1 or 2, wherein a step of stopping said Watchdog timer (13) upon detection of said STOP condition is performed.

4. Method according to one of the claims 1 to 3, wherein the serial data bus is an Inter IC bus.

5. Bus communication apparatus for use in a method according to one of claims 1 to 4, **characterized in that** said apparatus comprises a Watchdog timer (13) for the bus communication, means for detecting a START condition, means for starting the Watchdog timer (13) upon detection of a START condition and means for re-initializing the bus status upon exceeding the time limit of the Watchdog timer (13) before a STOP condition has been detected.

6. Bus communication apparatus according to claim 5, wherein the serial data bus is a master/slave bus and the WatchDog timer (13) is positioned in the slave (11) of the data bus.

7. Bus communication apparatus, according to claim 5 or 6, wherein the serial data bus is an Inter IC bus.
